# EUROPEAN PATENT APPLICATION

(11) **EP 2 974 906 A1**
(43) Date of publication of application: **20.01.2016**
(21) Application number: 15176721.7
(22) Date of filing: 14.07.2015
(51) Int. Cl.: B60P 1/44, B60P 3/12

(54) **DEVICE FOR LIFTING AND TRANSPORTING MOTORCYCLES AT THE BACK OF A MOTOR HOME**

(30) Priority: 15.07.2014 IT GE20140067
(71) Applicant: Sassi, Ezio, 17019 Varazze (IT)
(72) Inventor: Sassi, Ezio, 17019 Varazze (IT)
(74) Representative: Karaghiosoff, Giorgio Alessandro

(57) **Abstract**

Device for lifting and transporting motorcycles (2) at the external back of a motor home (3), comprising a tray (1) housing at least one motorcycle (2), means for lifting the tray (1) from a lower loading position to a lifted position, wherein the lifting means are motorized and are such that in the lower loading position the tray (1) rests on the ground, while in the lifted position the tray (1) is firmly held.

## Description

The present invention relates to a device for loading and safely transporting a motorcycle at the external back of a mobile home (motor home) according to the preamble of claim 1.

Several devices for loading and transporting motorcycles are known.

These devices all have in common a loading tray on which the motorcycle is manually loaded by pushing it. All the known loading trays are provided with a channel section and some of them have raising peripheral walls along at least three sides of the tray plane. Moreover the horizontal surface supporting the motorcycle always has a wall substantially flat and with no interruption on which the wheels of the motorcycle can freely rotate with no obstacles, therefore once the motorcycle is loaded it is substantially free to move and it has to be somehow fastened to the structure.

This type of arrangement causes the loading of the motorcycle on the tray for lifting it in the transport position to be uncomfortable and it requires difficult, quite long manoeuvres, and a considerable clear space at least on one side of the vehicle to which the loading and transporting device is associated.

There are solutions such as for example the document US 3,837,513 wherein the lifting tray is even pivoted about a vertical axis such to be brought perpendicular to the rear side of the transport vehicle such to overcome said drawbacks.

Besides the considerable complexity of the described device, however the need of having a maneuvering space at the side of the vehicle is simply transformed into the need of having a maneuvering space at the back of the transport vehicle.

Other devices of the prior art require an auxiliary inclined ramp and however the loading of the motorcycle on the tray is a difficult operation.

The aim of the present invention is to provide a device for lifting and transporting motorcycles at the back of transport vehicles and particularly of motor homes or the like that allows the drawbacks of the known devices to be overcome by providing a reliable and very handy system, besides being simple, strong and lightweight.

The invention achieves the above aims by a device of the type according to the preamble of claim 1, and that further has the characteristics of the characterizing part of claim 1.

The device is composed of a lifting tray and of means for lifting the tray.

More generally the lifting means can be of any type.

In a first non limitative embodiment the lifting means comprise two linear actuators connected to the tray by means of pins.

The actuators, in such case, have a single-acting oil-hydraulic operation and are driven by a suitable motorized oil-hydraulic control unit.

In this embodiment, when the tray is in the loading position in contact with the ground the actuators work by lifting the load up to the "upper dead point" where it is kept in position by closing the suitable raising control and mechanical lock valve.

The load is lowered by gravity by unloading in a controlled manner the valve mentioned above bringing the motorcycle at the ground level and thereby immediately available for being used.

In this embodiment the two linear actuators work in a mechanically independent manner they being synchronized only from the oil-hydraulic point of view by means of a flow divider valve.

Therefore they can reach a different level with respect to each other such to allow the tray to rest on the ground automatically compensating for moderate irregularities of the road or ground.

A different embodiment has been designed and made by using two pivotable arms instead of the linear actuators present in the previous version.

In such solution the lifting means comprise two pivotable arms such that the resulting movement trajectory is no more a straight one but it follows an arc of circumference defined by the motion of the free ends of the two arms.

The movement arms are pivoted on the structure at one end and they are brought upwardly by means of belts (straps) made of a suitable material and stiffness (for example safety belts of motor vehicles).

Such straps are engaged at the free end of the arms and are driven by a single gear motor operating on two winding spools (one on the left and another on the right) that wind the drive belts in the raising phase and that unwind them when going down thus controlling the synchronization of the movement thereof.

The straps are wound and unwound by reversing the rotation of the electric motor of the gear motor.

Also in such version the arms work in a mechanically independent manner with the consequent advantages already described in the straight trajectory solution, related to the fact of independently reaching the loading position with the tray in contact with a moderately irregular ground.

A system for always keeping the tray horizontal during the load movement is made which consists in a toothed belt and two toothed pulleys for each arm.

A pulley rigidly fixed on the structure is placed on the pivot axis of the arm (sun pulley) and a pulley, able to rotate, is mounted on the axis of the free end of the arm (planet pulley).

On the planet pulleys a "boom" is engaged, the pins lifting the motorcycle carrier tray come out therefrom with the characteristics already described for the straight trajectory version.

The tray intended to house the motorcycle has a shape and essential features for achieving the technical advantages and the aims of the present invention.

Several characteristics of the motorcycle carrier tray are described below according to the present invention that can be provided all or partially as an alternative or in combination with each other.

The tray preferably, but not limitatively, is placed along the direction perpendicular to the antero-posterior, or travel, direction of the motor home or of the transport vehicle.

The tray is composed of an L shaped cross-section profile member, said profile member composing the horizontal wall of the tray and a vertical wall on the side of the tray closer to the transport vehicle or motor home.

By such arrangement, the motorcycle is loaded laterally of the tray, that is along the direction perpendicular to the antero-posterior, or travel direction, of the motor home, by maneuvering the motorcycle in reverse, according to a movement that is substantially identical to the one used for parking the motorcycle in the normal conditions of use on the road.

As an alternative to a completely L-shaped tray, it is possible in a channel-like tray, namely having a U shaped cross-section, for the lateral, longitudinal side faraway from the transport vehicle, namely from the motor home, not to be present in the area involved in the manoeuvre, namely at least for a length sufficient for carrying out said loading manoeuvres in reverse.

Therefore it is possible to use a conventional channel-like tray by removing a sufficient portion of the rear side wall of the motorcycle carrier tray to allow the provided lateral loading operation for the motorcycle in reverse to be carried out.

Such solution of making the tray at least for a part of the length thereof, preferably for the entire length thereof, with a L-shaped section allows the operating space necessary on the road to be considerably saved, in addition to lead to a great functional ease during loading and unloading actions.

According to a further characteristic, the vertical side of the tray closer to the transport vehicle, that is the motor home, has an upright fastening a fork overhanging in the position vertically aligned with the horizontal side of the tray and forming a cradle engaging the rear wheel of the motorcycle in the proper loading position on the tray itself.

The loading movement in reverse described above therefore is performed till the rear tyre of the motorcycle contacts said stop, thus determining the final longitudinal position of the motorcycle.

Still according to an advantageous characteristic that can be provided in combination or as an alternative to said characteristics, but that if present cooperates therewith in a synergic manner, on the bottom of the tray at least one opening is formed, preferably two slot-like openings, that have a suitable size and such a location that each one of them is intended to cooperate with the front and rear wheel respectively of the motorcycle, such that upon lifting at least one wheel of the motorcycle remains engaged into the corresponding opening preventing the motorcycle from moving ahead or backwards along the tray.

When the fork engaging the rear wheel is present, the distance between said opening or openings is selected such that with the rear wheel in the engaging and stop position within said fork, the motorcycle wheel or wheels cooperate with the corresponding opening or openings.

Still according to a further characteristic, when two openings are provided for the front wheel and the rear wheel respectively, they are provided to be laterally misaligned with each other with respect to the longitudinal axis of the motorcycle such that the position of the rear wheel is not aligned with the one of the front wheel when the wheels engage the corresponding slot upon lifting.

Such arrangement causes the motorcycle not to roll longitudinally, or not to oscillate laterally anyhow upon its vertical movement, thus guaranteeing absolute safe operation without using the parking brake of the motorcycle that the user may also forget resulting in a serious danger.

Still according to a further advantageous characteristic that can be provided in combination with one or more of the preceding claims, at the end of the tray associated to the area of the rear wheel, on the lower side of the horizontal wall of said tray a spacing element is applied, preferably adjustable as regards its projection from said rear side and that holds said end of the tray in a position slightly raised from the road surface, while the opposite one is in contact with the road surface. This characteristic upon the loading of the motorcycle allows the rear wheel to be engaged from the beginning in the opening upon reaching the stop position against the fork, thus the motorcycle is already efficaciously held in the vertical position and moreover preventing it from moving forwards.

Upon lifting, when there is provided an opening also at the front wheel, it progressively penetrates into the opening by definitively locking the motorcycle in position on the tray.

According to an improvement, said spacing element, possibly an adjustable one, is made in the form of a sharp point made of hardened steel, therefore with the tray in the condition already lowered against the road surface and during the loading of the motorcycle thereon, the point penetrates into the road surface generating a fixed point absorbing the load stresses of the motorcycle on the tray that considerably relieves the structure of the arms and of the lifting mechanisms therefrom.

Therefore the further strong point prevents the lifting mechanisms from withstanding all the "stress" caused by the loading operation that often is carried out with not so much delicacy.

Still according to a further characteristic, the tray has two lifting locations where the pin connecting it to the actuators are connected.

The lifting location related to the front wheel is provided as a slot for compensating the center-to-center distance, whose change is due to the tray resting on a ground not completely regular as regards its planarity.

The fastening of the motorcycle on the motorcycle carrier tray can be carried out in several manners and according to a preferred but not limitative embodiment it is guaranteed in the travel condition during the transport by means of a high-resistance belt with a return ratchet that passes on the platform of the motorcycle surrounding the profile thereof.

Such belt is engaged with the system structure and the operation of the ratchet causes a traction that loads downwardly the suspensions of the motorcycle, which is supported on its own suspensions when ready for the road.

It is confirmed that this same tray described above is used with the same modes also on the version with straight trajectory actuators that has been described at the beginning of such text.

From what described above it is clear that the lifting means are motorized and are such that in the lower loading position the tray rests on the ground, while in the lifted position the tray is firmly held.

Thus when the tray is in the lower loading position, it is in an optimal position for loading the motorcycle, such not to need further ramps or to manually lift the motorcycle.

The fastening of the motorcycle on the motorcycle carrier tray when ready for the road is identical to the one already described above.

Still according to a further characteristic, the number plate of the motor home and the rear lights are inserted in a profile with a suitable shape and size that is fastened by means of two arms engaged to the main ones.

Thus the number plate and the lights, in the loading position are not visible, they being turned downwardly, while they will be exposed in the proper position during the travel condition.

Advantageously the last version with the trajectory as an arc of a circumference does not provide any fastening of the device structure to the wall of the motor home.

Only the frame of the vehicle has to support the system.

These and other characteristics and advantages of the present invention will be more clear from the following description of some embodiments shown in the annexed drawings wherein:
Figs.1 to 4 are side views of a preferred embodiment, called as Simax 150 AC;
Figs.5 to 7 are rear views of the preferred embodiment;
Figs. 8 to 10 are side views of a further embodiment, called as Simax 150 R.
Figures 11, 12 and 13 are a top plan view, a side elevation view in the direction of the longitudinal axis of the tray and a side view in a direction perpendicular to the longitudinal axis of said tray, of the tray according to the present invention.

The figures show different embodiments of the device for lifting and transporting motorcycles for a motor home 3, comprising a tray 1 or platform, housing at least one motorcycle 2 and means lifting the tray from a lower loading position to a lifted position.

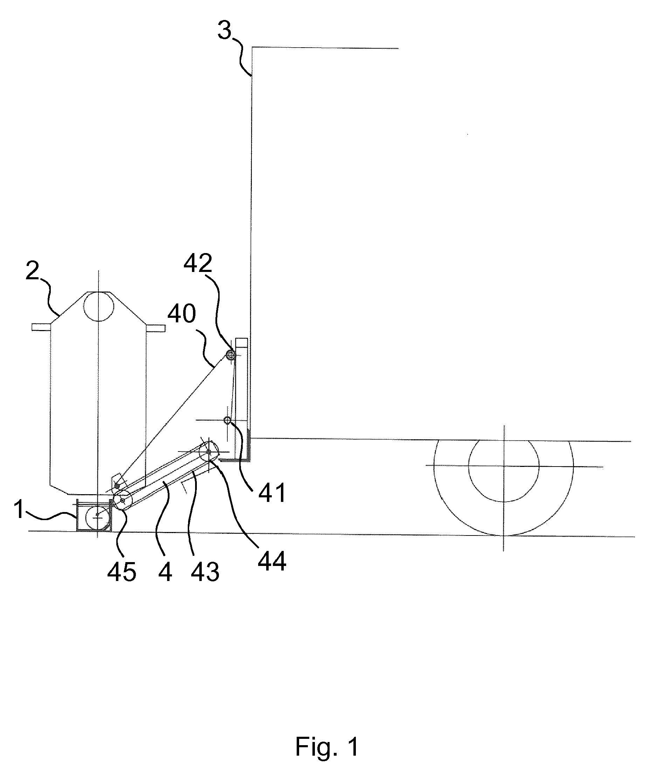

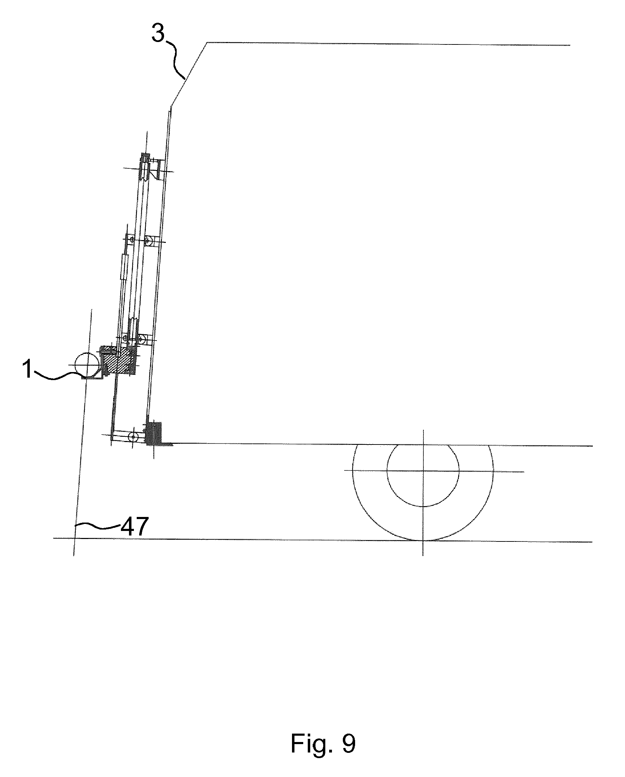

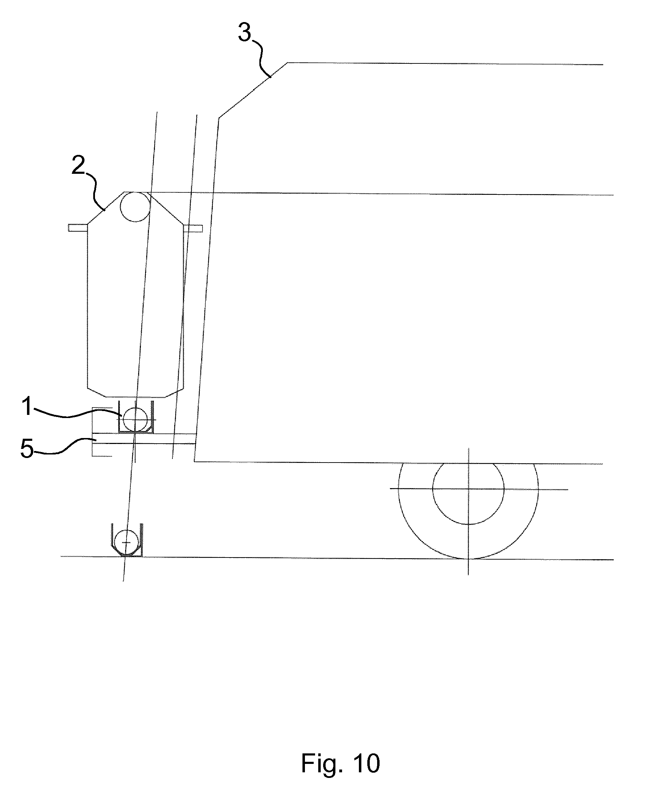

In figures 1 to 10, in order to make clear the advantages related to some specific characteristics of making the tray that can be provided regardless of the shape of the tray, the tray 1 is shown shaped as a channel for housing the wheels of the motorcycle 2, with a U shaped cross-section and a length along its longitudinal axis, that is the one parallel to the antero-posterior direction of the motorcycle 2, considerably greater than its own width. The length of the tray 1 is comparable to the length of the motorcycle 2, while the width of the tray 1 is only slightly greater than the width of the wheels of the motorcycle 2.

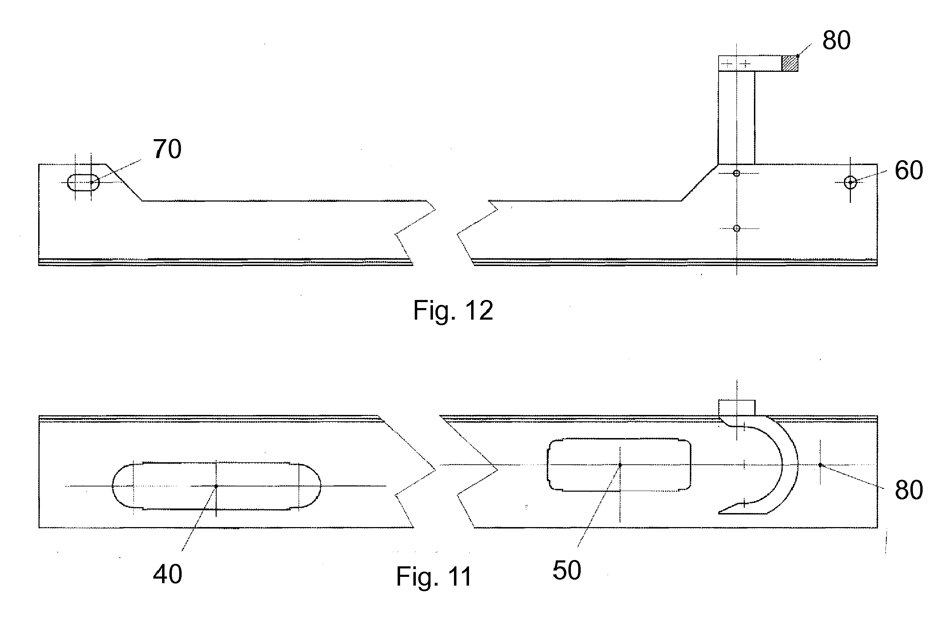

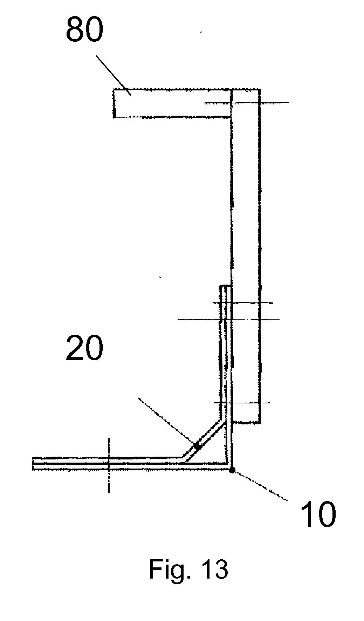

Figures 11 to 13, that will be described below in more details on the contrary show the preferred embodiment of the tray according to the present invention by means of which the technical advantages provided by the present invention are fully achieved.

As regards the more general parts of the lifting device, in the first embodiment of figures 1 to 7, called as Simax 150 AC, the lifting means lift the tray 1 along a curved trajectory and they comprise at least two pivotable arms 4.

The arms 4 are pivoted at one end coupled to the motor home 3, such to be pivotable about the same horizontal axis, and they are connected to the free end of the tray 1 in an articulated manner.

The device comprises a gear motor 41 that drives spools for winding drive belts 40, which drive belts 40 are fastened to the free ends of the arms 4.

The gear motor 41 is preferably driven by an electric motor.

When the gear motor 41 is driven for winding the drive belts 40, the arms 4 are pivoted and the tray 1 is lifted, while when the gear motor 41 is driven for unwinding the drive belt 40 the arms 4 are pivoted in the direction lowering the tray 1 by gravity.

Advantageously an idle pulley 42 of the drive belt 40 is provided, placed between the gear motor 41 and the end of the drive belt 40 coupled to the arm 4. The idle pulley 42 is placed above the gear motor 41, such to give to the drive belt 40 an angle with respect to the arm 4 enough for lifting the tray 1.

There are provided means for keeping the tray 1 horizontal during the pivotal movement of the arms 4, which means comprise a toothed belt 43, which is engaged in a stationary toothed pulley 44 (sun pulley) coaxial to the pivot of the arm 4 and it is engaged with a further toothed pulley 45 (planet pulley) coupled with an articulation arm or "boom" integral with the tray 1.

Figure 1 shows the arm 4 pivoted downwardly such to bring the tray 1 in contact with the ground.

In this condition the motorcycle 2 is easily mounted on the tray 1. As it can be noted in the figures, since the tray 1 completely adheres to the ground and since its thickness is very small, the motorcycle 2 is mounted on the tray 1 without any type of efforts for the user.

In this lower loading position, once the motorcycle 2 is mounted on the tray 1, the gear motor 41 is driven and the drive belts pivot the arms 4 lifting the tray 1.

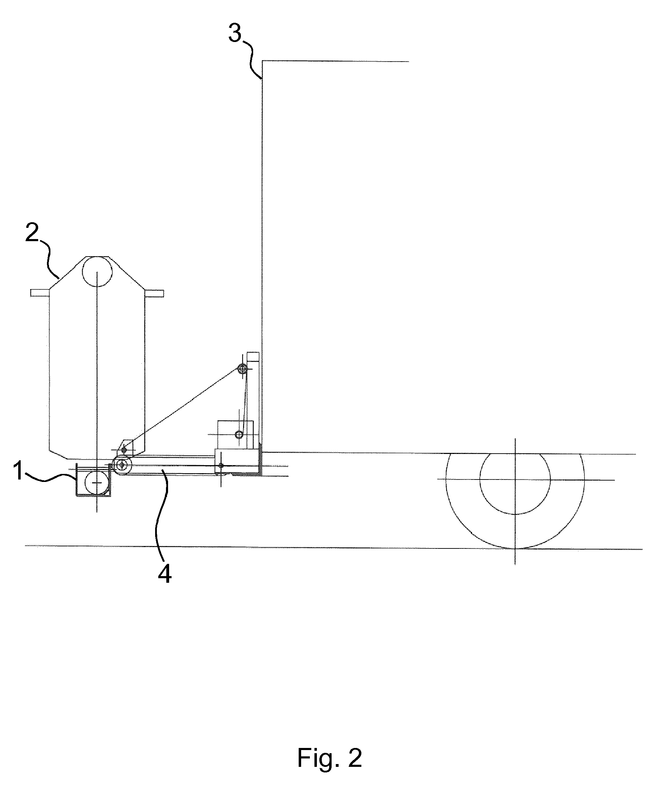

Figure 2 shows an intermediate position between the lower loading position and the lifted position, wherein the arm 4 is in the horizontal position.

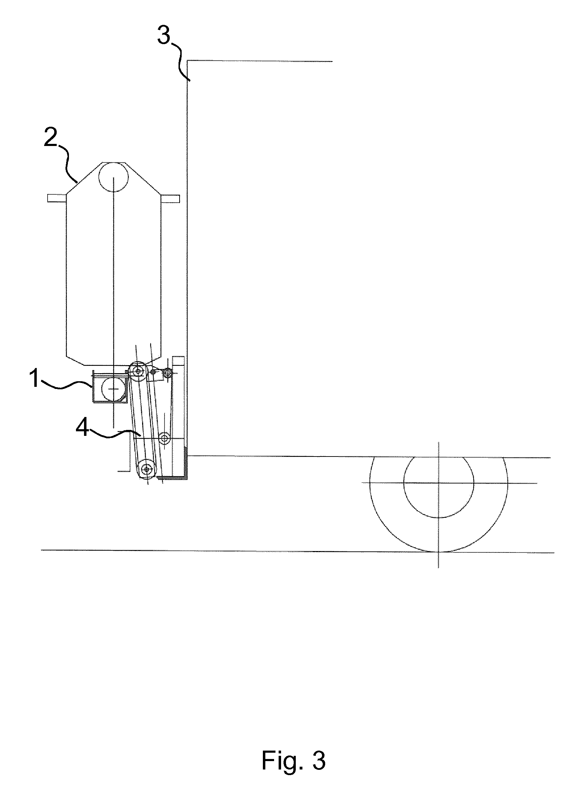

Figure 3 shows the final lifted position, wherein the motorcycle 2 is leaned to the rear wall of the motor home 3 and therefore it is in the position ready for the road.

In this position, due to the irreversibility of the gear motor 41, the arm cannot pivot downwardly, and therefore the position is firmly kept.

As it can be seen in figures 1, 2 and 3 the means for keeping the tray 1 horizontal during the pivotal movement of the arms 4 cause the motorcycle 2 not to be subjected to inclinations when it is lifted.

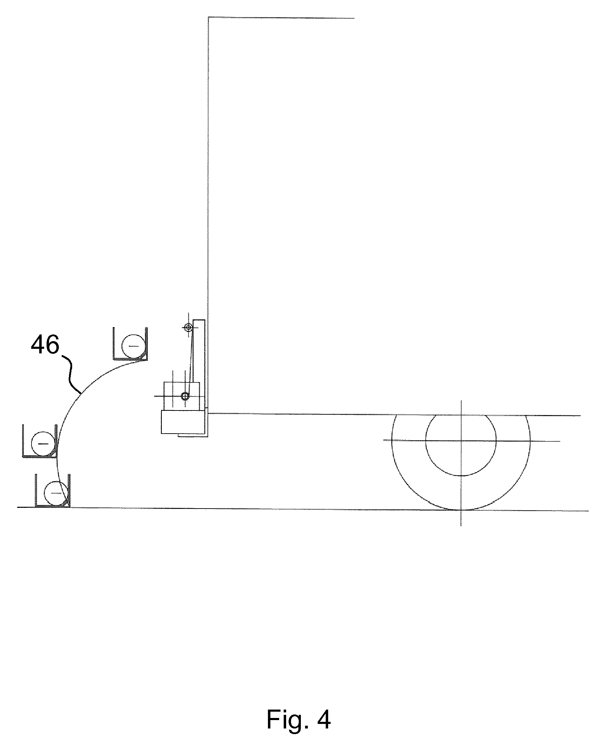

Figure 4 shows the trajectory as an arc of circumference, that is the one described by the free ends of the arms 4, together with the pivotal movement of the "booms", engaged with the planet toothed wheels of the system for keeping the tray horizontal, present at the free end of the lifting arms. Moreover the three positions of the tray 1 corresponding to figures 1, 2 and 3 respectively are shown.

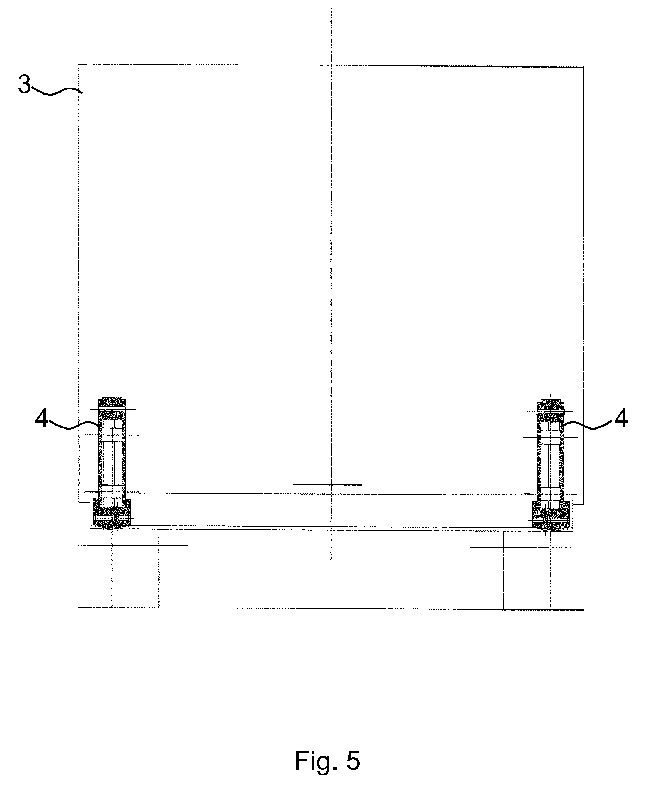

Figure 5 shows a rear view of the motor home 3 and of the device, only with the arms 4 visible, placed in the lifted position.

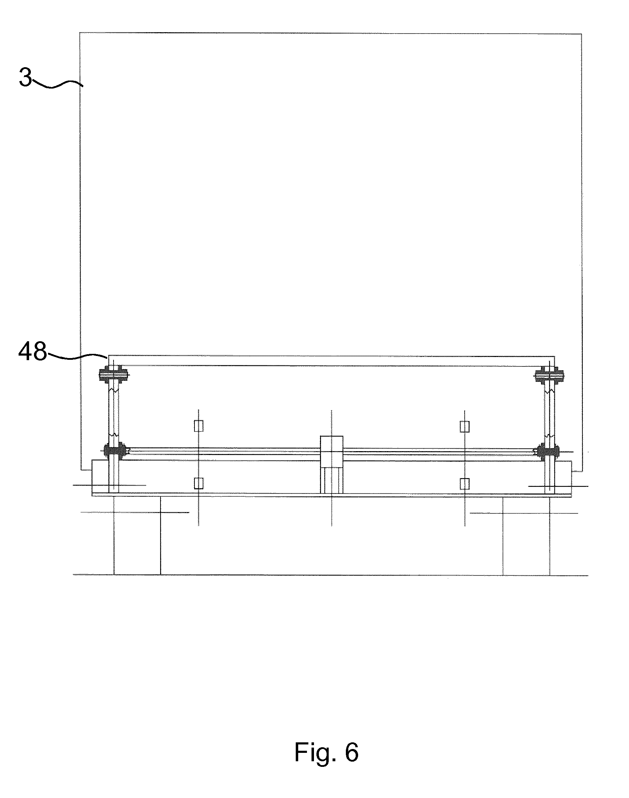

Figure 6 shows the same view, but only with the supporting frame 48 for the device and gear motor 41 visible.

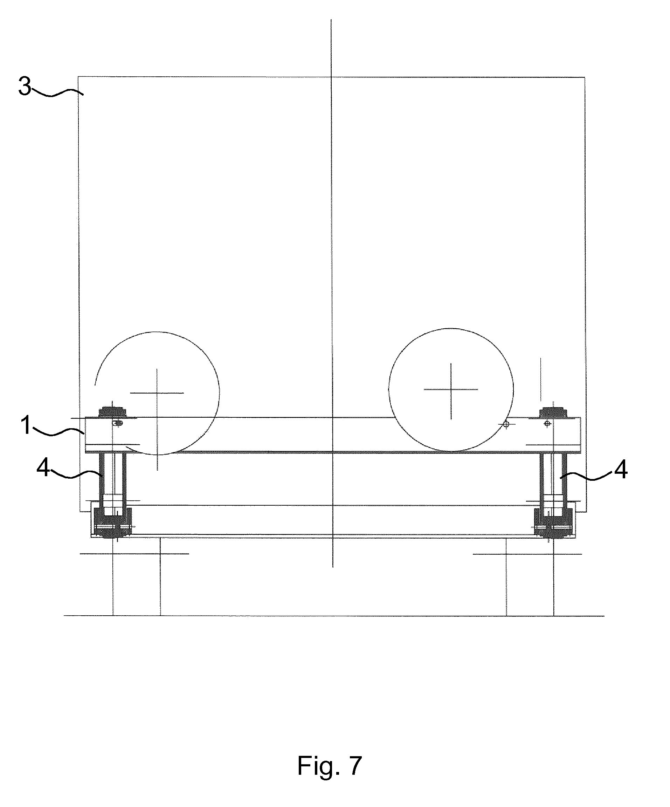

Figure 7 shows the same view, with the arms 4 visible, placed in the lifted position, and with the tray 1 visible. Also the final position of the wheels of the motorcycle 2 is visible.

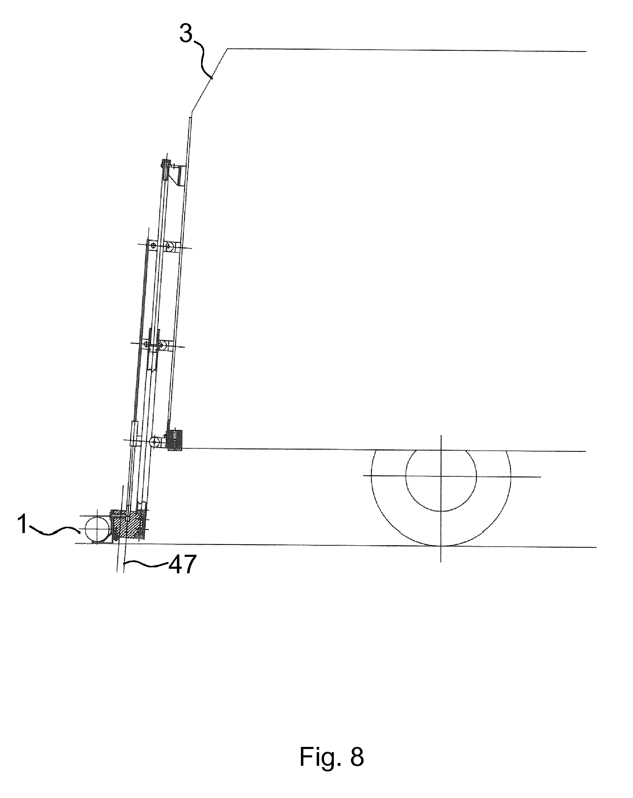

Figures 8 to 10 show a further embodiment of the device of the present invention, called as Simax 150 R, wherein the lifting means lift the tray along a straight trajectory 47.

The device comprises a supporting frame provided with vertical guides, on which a second frame supporting the tray 1 is translatable.

In this case the lifting means comprise two hydraulic cylinders.

As in the other described examples, the device is placed at the back of the motor home 3.

Therefore the tray 1 is moved from the lower loading positon to the lifted position and it rests on a mechanical lock system.

With reference to figures 11 to 13, they show different views of the tray for the lifting device according to the present invention.

The motorcycle carrier tray is the essential key of the function of the whole device loading and transporting motorcycles or the like and of its advantageous use.

Said motorcycle carrier tray 1 is the only part in direct contact with the motorcycle to be moved and it has characteristics of sure functional and constructional innovation. As it is pointed out in figures 11 to 13, it is composed of a number of two sheets folded beforehand and suitably engaged with each other such to form an element supporting the motorcycle with a "L"-shaped cross-section whose vertical side is provided along the longitudinal edge of the bottom wall closer to the transport vehicle 3. The two shaped sheets are connectable with each other by several techniques among which for example spot welding, gluing by chemical products or another system suitable for the aim.

It has been possible to find that the gluing solution has fully satisfied the task with a very satisfying result.

In details the figures show a motorcycle carrier tray intended to be associated to lifting mechanisms, such as the ones described above and especially as the one described with reference to figures 1 to 7 where 10 denotes the outer profile member of the tray made of an aluminium sheet bent by 90° and 20 denotes the inner profile member of the tray made of an aluminium sheet with two bending of 45°. These ones form a stiffening rib in the angle involved by the flexion load.

30 denotes the support or fork stopping the rear wheel in the final position and holding the motorcycle in the vertical position.

Said support 30 is made of an upright engaging a fork housing the rear tyre. All is rigidly fixed in the proper position at the outside of the vertical side of the tray itself.

The horizontal side of the tray has a slot 40, a through one in the thickness direction, for partially housing the tyre of the front wheel and a slot 50, a through one in the thickness direction too, for housing the tyre of the rear wheel.

60 denotes a hole housing a lifting pin that comes out from the lifting arm (passenger side).

With reference in particular to the embodiment of figures 1 to 7, it is reminded and pointed out that both the lifting arms are equipped with a constant polarization system in the horizontal position of the lifting plane, that is of the tray.

In the opposite position there is provided a slot 70 housing a further lifting pin with identical characteristics of the hole 60 serving for the driving side. Such slot 70 is obtained for allowing the center-to-center distance of the lifting arms to be changed, that, since they are independent from each other, can rest at different levels due to the imperfections in the planarity of the road surface.

A point 80 for the rear support of the tray has two functions, and both the functions are particularly important. Said point 80 for example is obtained by means of a screw made of hardened steel and it is sharpened with an angle of 60°. Moreover the screw is hardened at the sharp tip that is intended to contact the ground. It rests in a threaded hole made on the bottom of the tray and it can be adjusted as regards the projection under the tray by means of a lock nut. Such projection contacts the road surface as the first one, keeping the tray (passenger side) raised for a suitable amount; while the opposite edge of the tray (driving side) directly rests on the road. Thus the tray is kept in a slightly inclined position with respect to the road plane with the part intended for the rear of the motorcycle higher than the part that will receive the front part. When the motorcycle is loaded its weight will cause the hardened tip to penetrate for a given amount into the asphalt. Thus an additional engaging point is obtained by the ground that will considerably reduce the stress that has to be withstood by the rear arm in order to oppose the inertia of the motion of the vehicle that has to stop against the holding fork 30. Also other predictable external efforts can be efficaciously opposed. A further function of the point 80 is that by producing a set distance between the road plane and the rear part of the tray the rear tyre is pre-housed into its slot 50 without touching anymore the road surface already before starting the lifting action.

A proper dimensioning of the slot 50 with a corresponding positioning of the stop fork will cause the rear wheel to be accurately engaged in the desired final position. On the contrary the front wheel continues, through its slot 40, to contact the road surface. Upon lifting due to the synchronization of the drive belts the front part of the tray will move upwardly in advance with respect to the rear one and the front tyre will be detached from the ground.

From what mentioned above the advantages and facilities of the use of such tray clearly appear in combination with one of said lifts and particularly with the lift of figures 1 to 7. The "L" shape of the tray allows the motorcycle to be loaded laterally with the reverse manoeuvre and a bayonet-like trajectory. Such manoeuvre is considerably easy, not obliging the two wheels to be aligned as on the contrary it is necessary for loading it on a tray with a U-shaped section. Moreover such manoeuvre is carried out in a very small space.

The desired misalignment between the two slots 40 and 50 housing the wheels serves for opposing a possible forward rolling of the motorcycle during the lifting step. After the very first slope portion of the tray also the front tyre remains engaged in its slot. In such condition, the motorcycle is prevented from doing any dangerous forward movement since the two wheels, in order to roll, have to follow two different directions, even if parallel ones.

Such effect is cancelled only in the step of the final unloading of the tray on the ground when the front tyre is again in contact with the ground; thus the motorcycle can be easily unloaded from the system without any efforts.

## Claims

1. Device for lifting and transporting motorcycles (2) at the external back of a motor home (3), comprising a tray (1) housing at least one motorcycle (2), means for lifting the tray (1) from a lower loading position to a lifted position,
**characterized in that**
the lifting means are motorized and are such that in the lower loading position the tray (1) rests on the ground, while in the lifted position the tray (1) is firmly held.

2. Device according to claim 1, wherein the lifting means lift the tray (1) along a curved trajectory (46).

3. Device according to claim 2, wherein the lifting means comprise at least two pivotable arms (4), which arms (4) are pivoted at one end, such to be pivotable about the same axis, and they are connected to the free end of the tray (1) in an articulated manner.

4. Device according to claim 3, wherein the lifting means comprise at least one gear motor (41), which gear motor (41) is connected to one or more spools winding one or more drive belts (40), which drive belts (40) are fastened to the free end of the arms (4).

5. Device according to claim 3 or 4, wherein there are provided means for keeping the tray (1) horizontal during the pivotal movement of the arms (4).

6. Device according to claim 5, wherein the means for keeping the tray (1) horizontal during the pivotal movement of the arms (4) comprise for each arm a toothed belt (43), which toothed belt (43) is engaged in a stationary toothed pulley (44) coaxial to the pivot of the arm (4) and it is engaged with a further toothed pulley (45), which is free to rotate and which is coupled to an articulation arm (4) integral with the tray (1).

7. Device according to claim 1, wherein the lifting means lift the tray (1) along a straight trajectory (47).

8. Device according to claim 7, wherein the lifting means comprise at least one oil-hydraulic cylinder or at least one mechanical actuator.

9. Device according to one or more of the preceding claims, **characterized in that** the tray (10, 20) has, at least for a predetermined length, a "L"-shaped cross-section with a horizontal support wall and a vertical side along the longitudinal edge closer to the transport vehicle.

10. Device according to one or more of the preceding claims, wherein the tray (1) is provided with at least one opening, preferably two slot-like openings (40, 50), that have a suitable size and such a location that each one of them is intended to cooperate with the front and rear wheel respectively of the motorcycle, such that upon the lifting at least one wheel or both the wheels of the motorcycle remain engaged into the corresponding opening preventing the motorcycle from moving ahead or backwards along the tray.

11. Device according to claim 10, wherein the slot-like openings (40, 50) are provided laterally misaligned with each other in the transverse direction of the longitudinal axis of the motorcycle and with the tray in the lifted condition they cause the wheels of the motorcycle to be positioned with a transverse misalignment between the front wheel and the rear wheel of the motorcycle.

12. Device according to one or more of the preceding claims, wherein the tray (1) underneath is provided, at least in the region of the rear wheel, with at least one spacing element, optionally with the shape of a sharp point (80) with the tip faced downwardly and having such a projection to hold the end of the tray associated with the rear wheel in the position raised from the road surface, for a predetermined amount.

13. Device according to one or more of the preceding claims, **characterized in that** it has an upright fastening a fork (30) overhanging in the position vertically aligned with the horizontal side of the tray and forming a cradle engaging the rear wheel of the motorcycle in the proper position for loading it on the tray.

14. Device according to one or more of the preceding claims 10 to 13, **characterized in that** when the fork (30) engaging the rear wheel is provided, the distance between said opening or openings (40, 50) is selected such that with the rear wheel in the engaged and stop position within said fork (30), the wheel or wheels of the motorcycle cooperate with the corresponding opening or openings (40, 50).

15. Device according to one or more of the preceding claims, **characterized in that** the vertical side of the tray at the two opposite ends at one of said two ends respectively has a hole (60) engaging a pin connecting with the lifting means and at the other one of said two ends it has a horizontal slot (70) for horizontally slidably engaging a corresponding pin engaging with the lifting means.
